# EUROPEAN PATENT SPECIFICATION

(11) **EP 1 964 242 B1**
(45) Date of publication and mention of the grant of the patent: **20.02.2019**
(21) Application number: 06835279.8
(22) Date of filing: 19.12.2006
(51) Int. Cl.: H02K 21/46, H02K 1/22, H02K 1/27, H02K 17/26, H02K 17/02

(54) **ROTOR ASSEMBLY FOR USE IN LINE START PERMANENT MAGNET SYNCHRONOUS MOTOR**
ROTORBAUGRUPPE ZUR VERWENDUNG IN EINEM NETZ-START-PERMANENTMAGNET-SYNCHRONMOTOR
ENSEMBLE ROTOR POUR MOTEUR SYNCHRONE À AIMANT PERMANENT À DÉMARRAGE EN LIGNE

(30) Priority: 21.12.2005 KR 20050126849
(43) Date of publication of application: 03.09.2008
(73) Proprietor: DONGSEO ELECTRONIC CO., LTD., Gwangsu-gu, Gwangju (KR)
(72) Inventor: SHIN, Nam-Chul, Seoul (KR)
(74) Representative: Samson & Partner Patentanwälte mbB
(86) International application number: PCT/KR2006/005572
(87) International publication number: WO 2007/073082

(56) References cited:
- WO-A1-2004/057725
- WO-A1-2004/057725
- JP-A- 8 289 515
- JP-A- 2005 045 877
- US-A- 4 139 790
- US-A- 4 702 852
- US-A- 4 702 852
- US-A1- 2003 071 533
- US-A1- 2003 090 170
- US-A1- 2004 169 431
- US-A1- 2005 099 082

## Description

### Technical Field

The present invention relates to a rotor for use in a line start permanent magnet (LSPM) synchronous motor; and, more particularly, to a rotor for use in an LSPM synchronous motor capable of preventing a torque ripple phenomenon form being generated during an operation of the LSPM synchronous motor.

### Background Art

Generally, a motor is an apparatus that converts electric energy into mechanical energy to obtain rotational power and it may be generally used for industrial equipments as well as household appliances. The motor is largely classified into an alternating current (AC) motor and a direct current (DC) motor.

Meanwhile, an LSPM synchronous motor, i.e., a kind of AC motor, is driven with a torque generated by an interaction between a secondary current generated by a voltage induced onto conductors in a rotor and a magnetic flux generated by a winding wire of a stator. At this time, the torque is initiated by a composition torque of a reluctance torque and/or a magnetic torque and a torque component due to a cage. Also, during a normal operation after the startup, the magnetic flux of the permanent magnet installed in the rotor is synchronous with the magnetic flux generated from the stator so that the LSPM synchronous motor is driven in accordance with a speed of a rotational magnetic field in the stator.

A conventional LSPM synchronous motor according to the prior art will now be described with reference to the accompanying drawings.

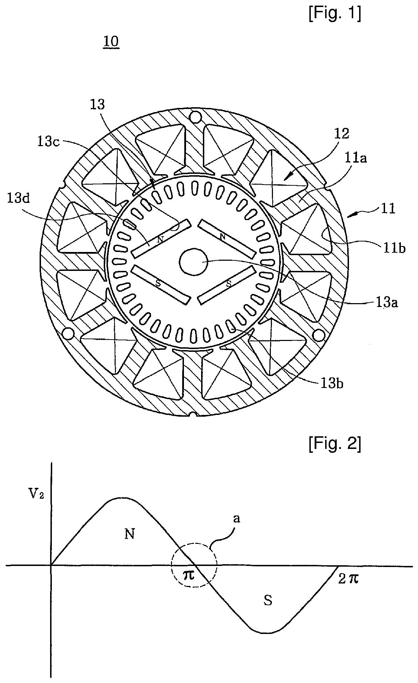

Fig. 1 is a plan view illustrating primary portions of the conventional LSPM synchronous motor. As shown in Fig. 1, a conventional LSPM synchronous motor 10 includes a stator 11 fixed to a casing or a shell (not shown), a coil 12 wounded to the stator 11, and a rotor 13 installed in the stator 11 with a gap therebetween to be freely movable within the stator 11.

The stator 11 is formed by laminating a plurality of silicon steel plates of same shape in an axial direction. A hole (not shown) for inserting the rotor 13 therethrough is formed within the stator 11, and a plurality of teeth 11a are formed along an inner surface of the stator 11 so that every two adjacent teeth 11a may be equidistantly apart from each other, thereby forming a slot 11b between every two adjacent teeth 11.

The coil 12 is wound around each tooth 1 la, so that the structure of the stator 11 may cause a rotational magnetic flux to be generated when an AC electric power is supplied to the coil 12.

The rotor 13 is rotatably mounted to a central portion of the stator 11 with a gap formed between the rotor 13 and the stator 11. A shaft 13a runs through and is fixed to an inserting hole (not shown) formed to a central portion of the rotor 13. A plurality of conductors 13b are vertically inserted into and fixed along a circumferential portion of the rotor 13, each conductor 13b being shaped as a bar. A multiplicity of magnet mounting holes 13c are formed around the shaft 13a, and a permanent magnet 13d is inserted into and fixed to each magnet mounting hole 13c.

The shaft 13a is mounted to a casing or a shell for forming a case of the LSPM synchronous motor 10, so that the shaft 13a may be rotated by means of bearings (not shown). The conductors 13b include Al, which has an excellent conductivity and may be subject to a die casting technique. Each permanent magnet 13d is interacted with a magnetic flux generated by the coil 12 so that a torque for driving the LSPM synchronous motor 10 may be generated.

If a current is applied to the coil 12 in the conventional LSPM synchronous motor 10 as described above, the rotational magnetic flux generated due to the structure of the stator 11 is interacted with an induced current generated in the conductors 13b of the rotor 13, so that the rotor 13 may be rotated with respect to the stator 11. If the rotor 13 reaches to a synchronization speed, a torque due to the permanent magnets 13d and a reluctance torque due to the specific structure of the rotor 13 are generated to rotate the rotor 13.

However, when the polarity of the magnetic flux is switched in the conventional LSPM synchronous motor 10 according to the prior art, i.e., when the polarity of the permanent magnet 13d is switched at a portion 'a' as shown in Fig. 2 which shows a secondary voltage induced in the rotor 13 depending on the rotational angle of the rotor 13, a torque ripple phenomenon is generally generated. Such a torque ripple phenomenon causes the rotor 13 to be vibrated, which may create a noise and thereby reduce the efficiency.

As such, a new LSPM synchronous motor has been continually required in that the torque ripple phenomenon generated in the LSPM synchronous motor 10 may be restrained, thereby minimizing the vibration and the noise and improving the efficiency of the LSPM synchronous motor.

Moreover, US 2004/169431 A1 discloses a rotor assembly according to the preamble of claim 1.

### Disclosure of Invention

### Technical Problem

It is, therefore, an object of the present invention to provide a rotor for use in an LSPM synchronous motor capable of preventing the torque ripple phenomenon from being generated during the operation of the LSPM synchronous motor, so that the vibration and the noise may be minimized, and the efficiency of the LSPM synchronous motor may be improved.

### Technical Solution

In accordance with an aspect of the present invention, there is provided a rotor assembly according to claim 1.

### Advantageous Effects

In accordance with the embodiment of the present invention, the torque ripple phenomenon is dramatically reduced, thereby restraining the vibration and the noise and improving the efficiency of the LSPM synchronous motor.

### Brief Description of the Drawings

The above and other objects and features of the present invention will become apparent from the following description of preferred embodiments, given in conjunction with the accompanying drawings, in which:
Fig. 1 is a plan view illustrating primary portions of a conventional line start permanent magnet (LSPM) synchronous motor according to the prior art;
Fig. 2 presents a graph showing an intrinsic switchover of a secondary voltage induced in the convention LSPM synchronous motor;
Fig. 3 provides a plan view illustrating a rotor for use in an LSPM synchronous motor in accordance with a first example;
Fig. 4 shows a plan view illustrating a rotor for use in an LSPM synchronous motor in accordance with a second example;
Fig. 5 describes a plan view illustrating a rotor for use in an LSPM synchronous motor in accordance with a third example;
Fig. 6 represents a plan view illustrating a rotor for use in an LSPM synchronous motor in accordance with the present invention; and
Fig. 7 depicts a graph showing an intrinsic switchover of a secondary voltage induced in the LSPM synchronous motor in accordance with the present invention.

### Best Mode for Carrying Out the Invention

Hereinafter, preferred embodiments of the present invention will be described in detail with reference to the accompanying drawings so that the present invention may be easily implemented by those skilled in the art. However, it is to be appreciated that the present invention is not limited to the preferred embodiments and may be varied in various ways.

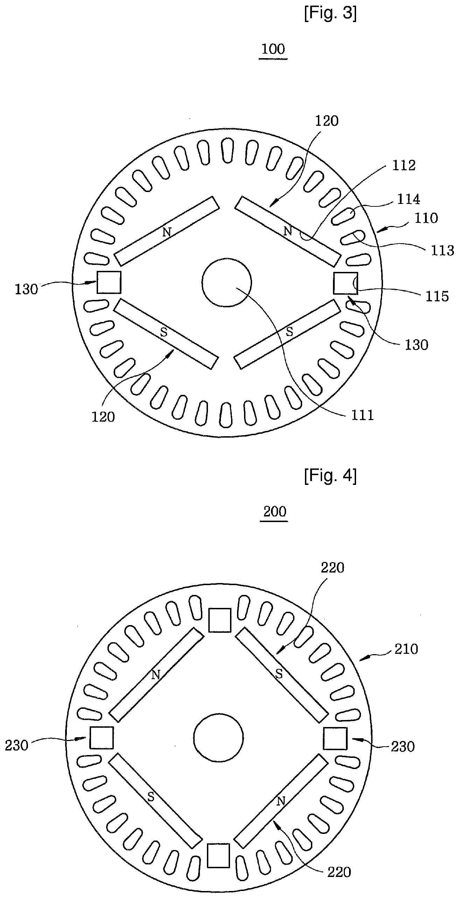

Referring to Fig. 3, there is provided a plan view illustrating a rotor for use in a line start permanent magnet (LSPM) synchronous motor in accordance with a first example. As shown in Fig. 3, a rotor assembly 100 for use in the LSPM synchronous motor in accordance with the first embodiment of the present invention is installed within the stator 11 (see Fig. 1) with a gap configured between the rotor assembly 100 and the stator 11 so that the rotor assembly 100 may be rotated in the stator 11.

The rotor assembly 100 includes a rotor core 110 which has a central portion and a circumferential portion, wherein a shaft hole 111 is formed at the central portion, and a plurality of conductors 114 are inserted along the circumferential portion; a multiplicity of permanent magnets 120 inserted into the rotor core 110 around the shaft hole 111; and a pair of ripple-reduction conductors 130 configured to be vertically inserted into the rotor core 110 at polar switchover regions. The polar switchover region is positioned between two opposite poles of two adjacent permanent magnets 120.

The shaft hole 111 is vertically formed at the central portion of the rotor core 110 and the shaft 13a (see Fig. 1) may be inserted into and fixed to the shaft hole 111. A plurality of conductor inserting holes 113 are formed along the circumferential portion of the rotor core 110, and every two adjacent conductor inserting holes 113 may be equidistantly apart from each other. Each conductor 114 includes a material such as Al with an excellent conductivity, and is inserted into and fixed to its corresponding conductor inserting hole 113 by means of a die casting technique or a similar technique.

A multiplicity of magnet mounting holes 112 for mounting the respective permanent magnets 120 therethrough are vertically formed at the rotor core 110 around the shaft hole 111. It is preferable that the magnet mounting holes 112 and the permanent magnets 120 inserted thereinto are symmetric with each other with respect to the shaft hole 111. It is more preferable that the magnet mounting holes 112 and the permanent magnets 120 inserted thereinto are equidistant from each other.

Ripple-reduction conductor inserting holes 115 for mounting the ripple-reduction conductors 130 therethrough is vertically formed into the rotor core 110 at the polar switchover region of the rotor core 110.

The rotor core 110 may be formed by a stacking process of silicon steel plates or by a compression process for a soft magnetic powder.

In order to manufacture the rotor core 110 by a compression molding process of the soft magnetic powder, a molding space which has a shape corresponding to the rotor core 110 is provided in a compression molding apparatus; the molding space is filled with the soft magnetic powder; and an impact-applying member such as a punch is used to form the shaft hole 111, the magnet mounting holes 112, the conductor inserting holes 113 and ripple-reduction conductor inserting holes 115 concurrently by compressing the soft magnetic powder.

The soft magnet powder used to manufacture the rotor core 110 may include iron-based particles which are respectively coated to be electrically isolated from each other. During the compression process, a lubricant and/or a binder may be added to the soft magnet powder, if necessary.

The compression process of the soft magnet powder allows the rotor core 110 to be configured as a soft magnetic composite (SMC) having a three dimensional shape. As such, unlike the conventional rotor core having a stacking structure of laminated silicon steel plates with an identical shape, a higher degree of freedom may be allowed in the rotor core 110 of the soft magnetic composite in accordance with the present invention so that the ripple-reduction conductor inserting holes 115 with various shapes as well as the magnet mounting holes 112 and the conductor inserting holes 113 may be realized in accordance with the present invention.

The permanent magnets 120 for generating a magnetic flux are inserted into the respective magnet mounting holes 112 of the rotor core 110 so that they may be fixed around the shaft hole 111 into the rotor core 110.

The ripple-reduction conductor 130 is made of a material such as Al which has an excellent conductivity. Unlike the conductors 114, one ripple-reduction conductor 130 is vertically inserted into each ripple-reduction conductor inserting hole 115 of the rotor core 110 to the polar switchover region, so that a secondary induction voltage induced in the rotor core 110 by means of a primary induction voltage induced in the stator 11 (see Fig. 1) and the magnetic flux generated by the permanent magnets 120 may be interacted to generate an induction current, thereby alleviating a polar switchover of the secondary induction voltage induced in the rotor core 110 to reduce a torque ripple phenomenon.

The ripple-reduction conductor 130 is positioned to the circumferential portion of the rotor core 110 between two opposite poles of two adjacent permanent magnets 120. If the rotor core 110 having four permanent magnets 120 is configured to have two polar switchover regions as shown in Fig. 3, two ripple-reduction conductors 130 are positioned to the two polar switchover regions, respectively.

It is preferable that each ripple-reduction conductor 130 has a cross-sectional area which is larger than that of each conductor 114 in order that the induction current induced in the ripple-reduction conductor 130 is larger than that induced in the conductor 114. If necessary, one or more conductors 114 which are respectively positioned around the ripple-reduction conductor inserting holes 115 into which the ripple-reduction conductor 130 are inserted may not be provided.

As shown in Fig. 4, there is provided a cross sectional view illustrating a rotor assembly 200 for an LSPM synchronous motor in accordance with a second example. Referring to Fig. 4, a rotor core 210 of the rotor assembly 200 has four permanent magnets 220 and is configured to have four polar switchover regions which are positioned between two opposite poles of two adjacent permanent magnets 220 which are opposite to each other. In this case, one ripple-reduction conductor 230 is mounted to each polar switchover region so that four ripple-reduction conductors 230 may be positioned to the four polar switchover regions, respectively.

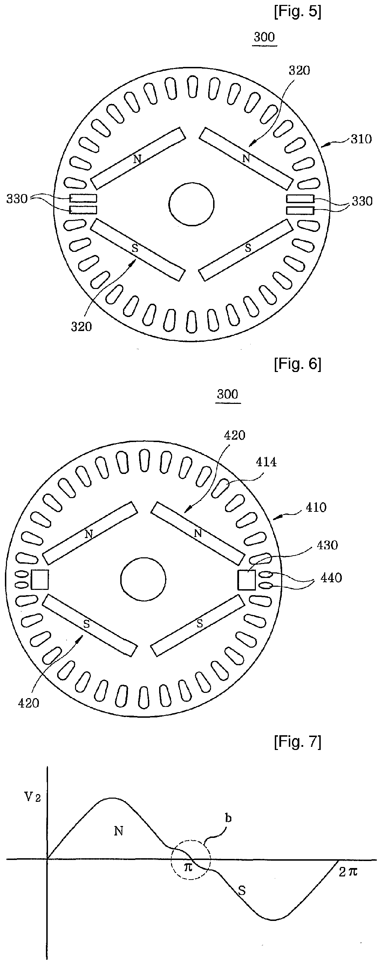

As shown in Fig. 5, there is provided a cross sectional view illustrating a rotor assembly 300 for an LSPM synchronous motor in accordance with a third example. Multiple, e.g., two, ripple-reduction conductors 330 may be mounted at each polar switchover region which is positioned between two opposite poles of two adjacent permanent magnets 320. The number of the ripple-reduction conductors 330 depends on the reduction ratio of the torque ripple required in consideration of the materials, the cross-sectional areas or etc. of the ripple-reduction conductors 330.

As shown in Fig. 6, there is provided a cross sectional view illustrating a rotor assembly 400 for an LSPM synchronous motor in accordance with the present invention. Various kinds of ripple-reduction conductors, i.e., a primary ripple-reduction conductor 430 and a secondary ripple-reduction conductor 440, may be mounted to each polar switchover region which is positioned between two opposite poles of two adjacent permanent magnets 420, wherein the secondary ripple-reduction conductor 440 is positioned outside the primary ripple-reduction conductor 430. The cross-sectional shapes of the primary ripple-reduction conductor 430 may be different from that of the secondary ripple-reduction conductor 440. In the fourth embodiment of the present invention, each primary ripple-reduction conductor 430 has a cross-sectional area larger than that of each conductor 414 while each secondary ripple-reduction conductor 440 has a cross-sectional area smaller than that of each conductor 414.

The operation of the rotor of the LSPM synchronous motor as configured above will be described hereinafter in detail.

When the LSPM synchronous motor is driven in accordance with the present invention, supplying a power to the coil 12 (see Fig. 1) wound to the stator (see Fig. 1) causes a primary induction voltage to be generated, which induces a secondary induction voltage to the rotor core 110, 210, 310 and 410. At this time, the ripple-reduction conductor 130, 230, 330, 430 and 440 positioned to each polar switchover region, which is positioned between two facing poles of two adjacent permanent magnets 120, 220, 320 and 420, alleviates the polar change of the induction voltage induced in the rotor 110, 210, 310 and 410, i.e., a polar change of the induction voltage V2 in a portion 'b' at which the polar switchover of the magnetic flux is generated as shown in Fig. 7.

While the invention has been shown and described with respect to the preferred embodiment, it will be understood by those skilled in the art that various changes and modifications may be made without departing from the scope of the invention as defined in the following claims.

## Claims

1. A rotor assembly (400) comprising:
a rotor core (410) which has a central portion and a circumferential portion, wherein a shaft hole is formed at the central portion, and a plurality of conductors (414) are arranged along the circumferential portion;
a multiplicity of permanent magnets (420) provided at a portion of the rotor core (410) around the shaft hole; and
at least one first ripple-reduction conductor (430) formed at a polar switchover region of the rotor core (410), the polar switchover region being positioned between two opposite poles of two adjacent permanent magnets (420), so that a polar switchover of an induction voltage induced in the rotor core (410) is alleviated to reduce a torque ripple phenomenon, **characterized in that** the rotor assembly (400) further comprises:
at least one second ripple-reduction conductor (440) configured to be inserted into the rotor core (410), wherein said at least one second ripple-reduction conductor (440) is positioned outside of said at least one first ripple-reduction conductor (430) in a diametrical direction of the rotor core (410), and each second ripple-reduction conductor (440) has a cross-sectional area which is smaller than that of each conductor (414).

2. The rotor assembly (400) of claim 1, wherein each first ripple-reduction conductor (430) has a cross-sectional area which is larger than that of each conductor (414).

3. The rotor assembly (400) of claim 1, where said at least one first ripple-reduction conductor (430) is arranged at the circumferential portion of the rotor core (410).

4. The rotor assembly (400) of claim 1, wherein said multiplicity of permanent magnets (420) are axially symmetric with each other with respect to the shaft hole.

5. The rotor assembly (400) of claim 4, wherein every two adjacent permanent magnets (420) of said permanent magnets (420) are equidistant from each other.

6. The rotor assembly (400) of claim 1, wherein said at least one first ripple-reduction conductor (430) is vertically inserted into the rotor core (410).

7. The rotor assembly (400) of claim 1, wherein the rotor core (410) is formed by a compression process of soft magnet powders.

## Patentansprüche

1. Rotoranordnung (400), umfassend:
einen Rotorkern (410), der einen Zentralabschnitt und einen Umfangsabschnitt aufweist, wobei an dem Zentralabschnitt ein Wellenloch ausgebildet ist, und eine Mehrzahl von Leitern (414) entlang des Umfangsabschnitts angeordnet sind;
eine Mehrzahl von Permanentmagneten (420), die an einem Abschnitt des Rotorkerns (410) um das Wellenloch herum vorgesehen sind; und
wenigstens einen ersten Welligkeitsverringerungsleiter (430), der an einem polaren Umschaltbereich des Rotorkerns (410) ausgebildet ist, wobei der polare Umschaltbereich zwischen zwei entgegengesetzten Polen von zwei benachbarten Permanentmagneten (420) positioniert ist, so dass ein polares Umschalten einer in dem Rotorkern (410) induzierten Induktionsspannung verringert wird, um ein Drehmoment-Welligkeitsphänomen zu reduzieren, **dadurch gekennzeichnet, dass** die Rotoranordnung (400) ferner umfasst:
wenigstens einen zweiten Welligkeitsverringerungsleiter (440), der konfiguriert ist, in den Rotorkern (410) eingesetzt zu werden, wobei der wenigstens eine zweite Welligkeitsverringerungsleiter (440) außerhalb des wenigstens einen ersten Welligkeitsverringerungsleiters (430) in einer diametralen Richtung von dem Rotorkern (410) positioniert ist, und jeder zweite Welligkeitsverringerungsleiter (440) eine Querschnittsfläche aufweist, die kleiner ist als die von jedem Leiter (414).

2. Rotoranordnung (400) nach Anspruch 1, wobei jeder erste Welligkeitsverringerungsleiter (430) eine Querschnittsfläche aufweist, die größer ist als die von jedem Leiter (414).

3. Rotoranordnung (400) nach Anspruch 1, wobei der wenigstens eine erste Welligkeitsverringerungsleiter (430) an dem Umfangsabschnitt des Rotorkerns (410) angeordnet ist.

4. Rotoranordnung (400) nach Anspruch 1, wobei die Mehrzahl von Permanentmagneten (420) in Bezug auf das Wellenloch axialsymmetrisch zueinander sind.

5. Rotoranordnung (400) nach Anspruch 4, wobei jeweils zwei benachbarte Permanentmagneten (420) der Permanentmagneten (420) äquidistant zueinander sind.

6. Rotoranordnung (400) nach Anspruch 1, wobei der wenigstens erste Welligkeitsverringerungsleiter (430) vertikal in den Rotorkern (410) eingesetzt ist.

7. Rotoranordnung (400) nach Anspruch 1, wobei der Rotorkern (410) durch einen Kompressionsprozess von Weichmagnetpulvern gebildet wird.

## Revendications

1. Ensemble rotor (400) comprenant :
un noyau de rotor (410) qui comporte une partie centrale et une partie circonférentielle, dans lequel un trou d'arbre est formé au niveau de la partie centrale, et une pluralité de conducteurs (414) sont agencés le long de la partie circonférentielle ;
une multiplicité d'aimants permanents (420) disposés au niveau d'une partie du noyau de rotor (410) autour du trou d'arbre ; et
au moins un premier conducteur de réduction d'ondulation (430) formé au niveau d'une région d'inversion polaire du noyau de rotor (410), la région d'inversion polaire étant positionnée entre deux pôles opposés de deux aimants permanents (420) adjacents, de telle sorte qu'une inversion polaire d'une tension d'induction induite dans le noyau de rotor (410) est atténuée pour réduire le phénomène d'ondulation de couple, **caractérisé en ce que** l'ensemble rotor (400) comprend en outre :
au moins un deuxième conducteur de réduction d'ondulation (440) configuré pour être inséré dans le noyau de rotor (410), dans lequel ledit au moins un deuxième conducteur de réduction d'ondulation (440) est positionné à l'extérieur dudit au moins un premier conducteur de réduction d'ondulation (430) dans une direction diamétrale du noyau de rotor (410), et chaque deuxième conducteur de réduction d'ondulation (440) présente une superficie en coupe transversale qui est plus petite que celle de chaque conducteur (414).

2. Ensemble rotor (400) selon la revendication 1, dans lequel chaque premier conducteur de réduction d'ondulation (430) présente une superficie en coupe transversale qui est plus grande que celle de chaque conducteur (414).

3. Ensemble rotor (400) selon la revendication 1, dans lequel ledit au moins un premier conducteur de réduction d'ondulation (430) est agencé au niveau de la partie circonférentielle du noyau de rotor (410).

4. Ensemble rotor (400) selon la revendication 1, dans lequel ladite multiplicité d'aimants permanents (420) sont axialement symétriques entre eux par rapport au trou d'arbre.

5. Ensemble rotor (400) selon la revendication 4, dans lequel tous les deux aimants permanents (420) adjacents desdits aimants permanents (420) sont équidistants l'un de l'autre.

6. Ensemble rotor (400) selon la revendication 1, dans lequel ledit au moins premier conducteur de réduction d'ondulation (430) est verticalement inséré dans le noyau de rotor (410).

7. Ensemble rotor (400) selon la revendication 1, dans lequel ledit noyau de rotor (410) est formé par un processus de compression de poudres magnétiques douces.
